# EUROPÄISCHE PATENTSCHRIFT

(11) **EP 2 663 750 B1**
(45) Veröffentlichungstag und Bekanntmachung des Hinweises auf die Patenterteilung: **15.03.2017**
(21) Anmeldenummer: 11805050.9
(22) Anmeldetag: 27.12.2011
(51) Int. Cl.: F01N 3/20

(54) **FLUIDTANK MIT FILTERSYSTEM**
FLUID TANK COMPRISING A FILTER SYSTEM
RÉSERVOIR DE FLUIDE PRÉSENTANT UN SYSTÈME DE FILTRATION

(30) Priorität: 12.01.2011 DE 102011002573
(43) Veröffentlichungstag der Anmeldung: 20.11.2013
(73) Patentinhaber: Robert Bosch GmbH, 70442 Stuttgart (DE)
(72) Erfinder: HAEBERER, Rainer, 75015 Bretten (DE); LOLAS, Georgios, 70182 Stuttgart (DE)
(86) Internationale Anmeldenummer: PCT/EP2011/074063
(87) Internationale Veröffentlichungsnummer: WO 2012/095260

(56) Entgegenhaltungen:
- DE-A1-102006 046 899
- DE-A1-102008 042 954
- FR-A1- 2 918 718

## Beschreibung

Die Erfindung betrifft einen Fluidtank, insbesondere einen Fluidtank zur Speicherung eines Reduktionsmittels für ein Abgasreduktionssystem, mit einem Filtersystem und ein Verfahren zum Absaugen von Fluid aus einem solchen Fluidtank.

### Stand der Technik

Bei Verbrennungsmotoren, insbesondere Dieselmotoren, müssen aufgrund von Abgasvorschriften unter anderem in den Abgasen enthaltene Stickoxide (NOₓ) reduziert werden.

Ein bekanntes Verfahren zur NOₓ-Reduktion ist das so genannte SCR-Verfahren, bei dem ein flüssiges Reduktionsmittel, insbesondere eine wässrige Harnstofflösung ("AdBlue"), in den Abgasstrang des Verbrennungsmotors eingespritzt wird, um die in den Abgasen enthaltenen Stickoxide zu Stickstoff (N₂) und Wasser (H₂O) zu reduzieren.

Das flüssige Reduktionsmittel wird üblicherweise in einem Tank bereitgehalten und durch eine Pumpe aus dem Tank abgesaugt, um einem Einspritzsystem zur Verfügung gestellt zu werden.

Ein derartiger Tank beinhaltet in der Regel ein Filter, das vor der Absaugstelle angeordnet ist, um zu verhindern, dass feste (Schmutz-)Partikel aus dem Tank in das Einspritzsystem gelangen und dort beispielsweise die Pumpe oder die Einspritzdüse verstopfen.

DE10 2008 042 954 A1 offenbart ein Dosiersystem für ein flüssiges Medium insbesondere ein flüssiges Reduktionsmittel, bei dem eine erste Sauglanze und eine zweite Sauglanze gemeinsam von oben durch einen Heiztopf geführt werden, der sich in einem Speicherbehälter befindet. Die erste Sauglanze wird anschließend wieder aus dem Heiztopf herausgeführt. Eine Saugöffnung der ersten Sauglanze, die an einem unteren Ende der ersten Sauglanze ausgebildet ist, ist von einem flexiblen Filtersieb umgeben, damit keine Verunreinigungen

Das feine Filtermaterial des Filters stellt einen Widerstand für den Strömungsfluss des Reduktionsmittels dar, so dass beim Absaugen des Reduktionsmittels aus dem Tank im Bereich zwischen dem Filter und der Pumpe ein Unterdruck entsteht. Der Unterdruck bewirkt, dass im flüssigen Reduktionsmittel gelöste Gase freigesetzt werden. Harnstofflösung neigt insbesondere dazu, Kohlendioxid (CO₂) freizugeben.

Ist das Filtermaterial oberhalb der Absaugstelle angeordnet, steigt das freigesetzte Gas aufgrund seiner geringeren Dichte in Form von Gasblasen nach oben und sammelt sich unter dem Filtermaterial, da die Gasblasen das Filtermaterial aufgrund der Oberflächenspannung der Gas-Flüssigkeitsgrenze nicht durchdringen können.

Mit zunehmender Betriebsdauer der Pumpe entsteht so unterhalb des Filtermaterials ein immer größeres und dickeres Gaspolster, welches das flüssige Reduktionsmittel unterhalb des Filtermaterials verdrängt, so dass der Flüssigkeitsstand des Reduktionsmittels unterhalb des Filtermaterials abnimmt. Die durch das Filtermaterial angesaugte Flüssigkeit fällt tropfenweise durch das Filtermaterial und "regnet" durch das Gaspolster auf die unter dem Gaspolster angeordnete Flüssigkeit.

Aufgrund des durch das Gaspolster bewirkten niedrigen Flüssigkeitstands um die Absaugstelle besteht die Gefahr, dass beim Schwappen der Flüssigkeit, z. B. beim Kurven fahren, Beschleunigen oder Abbremsen, vorübergehend Luft in die Absaugstelle gelangt und von der Pumpe angesaugt wird. Luft im Einspritzsystem kann neben einer Fehldosierung des Reduktionsmittels Funktionsstörungen des Einspritzsystems, insbesondere der Pumpe und/oder der Einspritzdüse zur Folgen haben.

Auch ist nach der Erstbefüllung des Tanks aufgrund einer nicht vorhandenen Entlüftung des Filters die Funktionsfähigkeit des Systems erst nach einiger Zeit gegeben.

Schließlich bewirkt ein Gaspolster unterhalb des Filtermaterials eine thermische Isolation zwischen den Flüssigkeitsbereichen auf beiden Seiten des Filters, wodurch ein bei tiefen Umgebungstemperaturen notwendiges Erwärmen bzw. Auftauen des flüssigen Reduktionsmittels im Tank erschwert wird.

### Offenbarung der Erfindung

Eine Aufgabe der Erfindung ist es, einen Fluidtank mit einer Filtervorrichtung bereitzustellen, welche die zuvor beschriebenen Probleme vermeidet.

Diese Aufgabe wird erfindungsgemäß dadurch gelöst, dass ein Fluidtank zur Speicherung von flüssigem Reduktionsmittel zur Abgasreduktion mit allen Merkmalen des Anspruchs 1 versehen ist.

Ein erfindungsgemäßes Verfahren zum Absaugen von Fluid aus einem Fluidtank nach Anspruch 1 löst auch die Aufgabe, dadurch, dass das Fluid gleichzeitig durch eine erste Absaugöffnung und wenigstens eine zweite Absaugöffnung abgesaugt wird, wobei die erste Absaugöffnung oberhalb der zweiten Absaugöffnung in der Filterbox ausgebildet ist.

Dadurch, dass im Betrieb Fluid sowohl durch die erste Absaugöffnung am oberen Ende des Absaugrohres als auch eine unterhalb der ersten Absaugöffnung ausgebildete zweite Absaugöffnung abgesaugt wird, ist gewährleistet, dass stets Fluid in das Absaugrohr gelangt und ein unerwünschtes Ansaugen von Luft vermieden wird. Die Betriebsfähigkeit des Einspritzsystems wird so zuverlässig gewährleistet.

Erfindungsgemäß ist die zweite Absaugöffnung in einem möglichst großen vertikalen Abstand von der ersten Absaugöffnung vorzugsweise in der Nähe des Bodens der Filterbox ausgebildet. Ebenso hat die zweite Absaugöffnung einen kleineren Querschnitt als die erste Absaugöffnung. Versuche haben gezeigt, dass bei einem Innenquerschnitt der Saugleitung von etwa 20 mm² der Querschnitt der zweiten Absaugöffnung kleiner als ca. 3 mm² sein sollte. Die genauen Abmessungen und Toleranzen spielen keine Rolle, so dass es sich um eine sehr robuste und kostengünstig herzustellende Konstruktion handelt.

Aufgrund eines derartigen Querschnittsverhältnisses zwischen der ersten und der zweiten Absaugöffnung steht das Fluid im Betrieb bis zur oberen ersten Absaugöffnung am oberen Ende des Absaugrohres und die Filterbox ist nahezu komplett mit Fluid gefüllt.

Im Absaugrohr kann der Fluidspiegel mitunter etwas unterhalb des Fluidspiegels in den Außenbereichen der Filterbox liegen, da die durch das Filtermaterial "beregnete" Fläche (obere Stirnseite) der Absaugleitung deutlich kleiner als die übrige Filterfläche ist. Die Bereiche neben der Absaugleitung werden daher in der Summe stärker beregnet und sammeln demzufolge mehr Fluid.

In einer Ausführungsform ist die Filterbox am Boden des Fluidtanks ausgebildet. Dies ermöglicht eine besonders effektive Nutzung des Tankvolumens. Insbesondere kann die Filterbox so ausgebildet sein, dass ihr Boden integral mit dem Boden des Fluidtanks ausgebildet ist. Eine solche Kombination aus einem Fluidtank mit einer integrierten Filterbox ist besonders einfach und kostengünstig, beispielsweise als einstückiges Spritzgussteil, herstellbar. Alternativ kann die Filterbox austauschbar in dem Fluidtank angebracht sein. Dies ermöglicht es, die Filterbox zum Warten, Reinigen oder Austauschen einfach aus dem Fluidtank zu entnehmen.

In einer Ausführungsform ist die erste Absaugöffnung in der vom Boden des Fluidtanks abgewandten (oberen) Stirnseite des Absaugrohrs ausgebildet. Eine derartige erste Absaugöffnung lässt sich besonders einfach herstellen, da sie sich "automatisch" beim Zuschneiden des Absaugrohres auf die gewünschte Länge ergibt.

In einer Ausführungsform ist das Filtermaterial schräg, d. h. in einem Winkel, der größer als 0° und kleiner als 90° ist, zum Boden des Fluidtanks angeordnet. Insbesondere kann die Filterbox mit einem höheren Bereich, in dem das Filtermaterial einen größeren Abstand zum Boden aufweist, und einen niedrigeren Bereich, in dem das Filtermaterial einen geringeren Abstand zum Boden aufweist, ausgebildet sein.

In einer derartigen Filterbox mit einem schräg angeordneten Filtermaterial sammelt sich das aus dem Fluid austretende Gas in dem höheren Bereich der Filterbox unterhalb des Filtermaterials, so dass das Filtermaterial im niedrigeren Bereich der Filterbox in direktem Kontakt mit dem Fluid steht. Die Durchlässigkeit des Filtermaterials für Fluid und Wärme wird verbessert, da sich im niedrigeren Bereich der Filterbox keine Gas(blasen)schicht unterhalb des Filtermaterials ausbildet und den Durchtritt von Fluid und/oder Wärme durch das Filtermaterial behindert.

Das Absaugrohr ist in diesem Fall vorzugsweise im höheren Bereich der Filterbox angeordnet, um einen möglichst hohen Fluidstand innerhalb der Filterbox zu gewährleisten.

Das sich im höheren Bereich der Filterbox ansammelnde Gasvolumen wirkt sich vorteilhaft auf die Eisdruckfestigkeit des Tank- und Filtersystems aus, da sie durch beim Gefrieren expandierendes Fluid komprimierbar ist, um die Volumenexpansion gefrierenden Fluids aufzunehmen. Der durch gefrierendes Fluid im Tank entstehende Überdruck wird so begrenzt und eine Beschädigung des Tank- und Filtersystems durch gefrierendes Fluid wird verhindert.

In einer Ausführungsform ist das obere Ende des Absaugrohres abgeschrägt. Vorzugsweise ist das obere Ende des Absaugrohres derart abgeschrägt, dass die obere Stirnseite des Absaugrohres im Wesentlichen parallel zum schräg angeordneten Filtermaterial verläuft. Durch eine derartige parallel Ausrichtung der oberen Stirnseite des Absaugrohres zum Filtermaterial kann das obere Ende des Absaugrohres in einem sehr geringen Abstand vom Filtermaterial angeordnet werden, was einen besonders hohen Fluid-Füllstand innerhalb der Filterbox ermöglicht.

In einer Ausführungsform ist, vorzugsweise im einem niedrigeren Bereich der Filterbox, eine Heizquelle vorgesehen, die es ermöglicht, das Fluid in der Filterbox zu erwärmen, um es aufzutauen bzw. ein Einfrieren des Fluids zu verhindern.

Dadurch, dass sich bei schräg angeordnetem Filtermaterial im niedrigeren Bereich der Filterbox kein Luftpolster zwischen dem Filtermaterial und dem Fluid in der Filterbox ausbildet, ist eine gute Wärmeübertragung von dem Fluid innerhalb der Filterbox an das Fluid außerhalb der Filterbox möglich. Mit einer einzigen Heizquelle, die innerhalb der Filterbox angeordnet ist, kann so das gesamte Fluid im Fluidtank, d. h. sowohl das Fluid innerhalb als auch das Fluid außerhalb der Filterbox, erwärmt und ggf. aufgetaut werden. Da zum Erwärmen des gesamten Fluids im Fluidtank nur eine einzige Heizquelle notwendig ist, können die Kosten für eine zweite Heizquelle, die ggf. außerhalb der Filterbox angeordnet werden müsste, eingespart werden.

Ausführungsbeispiele eines erfindungsgemäßen Fluidtanks werden im Folgenden anhand der beigefügten Figuren näher erläutert.

Dabei zeigt:
Fig. 1 eine schematische Schnittansicht eines ersten Ausführungsbeispiels eines erfindungsgemäßen Fluidtanks;
Fig. 2 einen vergrößerten Ausschnitt eines Bereichs um die erste Absaugöffnung eines erfindungsgemäßen Fluidtanks gemäß dem in der Fig. 1 gezeigten ersten Ausführungsbeispiel; und
Fig. 3 eine schematische Schnittansicht eines zweiten Ausführungsbeispiels eines erfindungsgemäßen Fluidtanks.

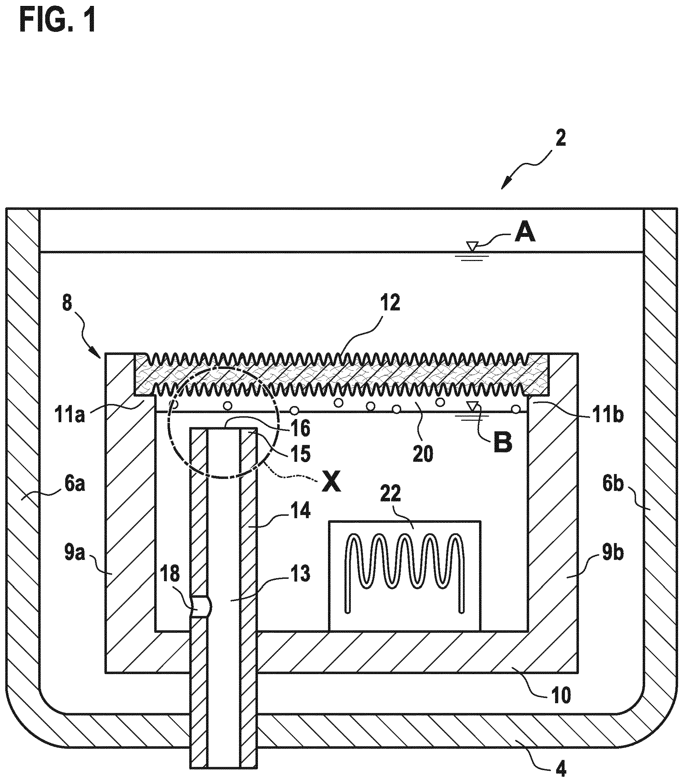

Das in der Fig. 1 gezeigte erste Ausführungsbeispiel eines erfindungsgemäßen Fluidtanks 2 weist einen Boden 4 und Seitenwände 6a, 6b auf, die ein Tankvolumen zur Speicherung eines Fluids begrenzen. Zusätzlich weist der Fluidtank 2 in der Regel einen in der Fig. 1 nicht gezeigten abnehmbaren oder fixierten Deckel auf, der mit einer Befüllungs- und Belüftungseinrichtung vorgesehen ist, die es ermöglicht, Fluid in das Tankvolumen einzufüllen.

Der Fluidpegel (Flüssigkeitsstand) des in der Fig. 1 gezeigten Fluidtanks 2 ist mit A gekennzeichnet.

Innerhalb des Tankvolumens des Fluidtanks 2 ist eine Filterbox 8 ausgebildet, die einen im Wesentlichen parallel zum Boden 4 des Fluidtanks 2 verlaufenden Filterbox-Boden 10 und im Wesentlichen parallel zu den Seitenwänden 6a, 6b des Fluidtanks 2 verlaufende Filterbox-Seitenwände 9a, 9b aufweist.

Der Fluidtank 2 und/oder die Filterbox 8 können auch mit einem in der Draufsicht runden, beispielsweise ellipsen- oder kreisförmigen Querschnitt mit einer einzige umlaufende Seitenwand 6a, 6b, 9a, 9b ausgebildet sein.

Die obere, vom Boden 4 des Fluidtanks 2 abgewandte Seite der Filterbox 8 ist durch ein geeignetes Filtermaterial 12 begrenzt. In dem in der Figur 1 gezeigten Ausführungsbeispiel ist das Filtermaterial 12 auf Vorsprüngen 11a, 11b, die an den oberen Enden der Filterbox-Seitenwände 9a, 9b ausgebildet sind, abgelegt und beispielsweise durch in der Fig. 1 nicht gezeigte Klammern oder eine Klebeverbindung an den Seitenwänden fixiert, um ein unerwünschtes Lösen bzw. Verrutschen des Filtermaterials 12 zu verhindern.

Fluid aus dem Tankvolumen kann so ausschließlich durch das Filtermaterial 12 in den vom Filterbox-Boden 18, den Filterbox-Seitenwände 9a, 9b und dem Filtermaterial 12 begrenzten Innenraum der Filterbox 8 eintreten, so dass nur durch das Filtermaterial 12 gefiltertes Fluid in das Innere der Filterbox 8 gelangt.

Ein Absaugrohr 14 ist im Wesentlichen parallel zu den Seitenwänden 6a, 6b, 9a, 9b durch den Boden 4 des Fluidtanks 2 und den Filterbox-Boden 10 in den Innenraum der Filterbox 8 geführt und mit seinem oberen Ende 15 knapp unterhalb des Filtermaterials 12 angeordnet.

Das Absaugrohr 14 weist entlang seiner Längsachse ein Längsbohrung 13 auf. An der von dem Filtermaterial 12 zugewandten Stirnseite an seinem oberen Ende 15 weist das Absaugrohr 14 eine erste Absaugöffnung 16 auf. Durch die erste Absaugöffnung 16 ist es möglich, durch Erzeugen eines Unterdrucks in der Längsbohrung 13 Fluid durch die Längsbohrung 13 aus dem Inneren der Filterbox 8 und insbesondere aus einem Bereich unmittelbar unterhalb des Filtermaterials 12 abzusaugen und einer nicht gezeigten Einspritz- und Dosiervorrichtung zur Verfügung zu stellen.

Zusätzlich weist das Absaugrohr 14 in einem unteren Bereich seines Umfangs knapp oberhalb des Filterbox-Bodens 10 eine zweite Absaugöffnung 18 auf, welche es ermöglicht, Fluid aus einem unteren, bodennahen Bereich der Filterbox 8 zu entnehmen.

Durch die zweite Absaugöffnung 18 kann auch dann zuverlässig gefiltertes Fluid aus dem Inneren der Filterbox 8 entnommen werden, wenn sich die erste Absaugöffnung 16 am obere Ende 15 des Absaugrohres 14 oberhalb des Fluidpegels B in der Filterbox 8 befindet, so dass kein Fluid aus der Filterbox 8 in die erste Absaugöffnung 16 gelangen kann. Durch die zweite Absaugöffnung 18 wird so in allen Betriebszuständen eine zuverlässige Versorgung der Einspritz- und Dosiervorrichtung des Abgasreduktionssystems mit gefiltertem Fluid aus dem Fluidtank 2 sichergestellt.

Neben dem Absaugrohr 14 ist am Boden 10 der Filterbox 8 eine Wärmequelle 22 installiert, die es ermöglicht, das Fluid innerhalb der Filterbox 8 zu erwärmen, um ein Einfrieren des Fluids bei tiefen Umgebungstemperaturen zu verhindern bzw. eingefrorenes Fluid aufzutauen. In einem nicht gezeigten Ausführungsbeispiel kann die Wärmequelle 22 auch (teil-)kreisförmig rund um das Absaugrohr 14 ausgebildet sein.

Wird der Druck in der Filterbox 8 durch das beschriebene Absaugen von Fluid reduziert, so bildet sich durch aus dem Fluid austretendes Gas, beispielsweise CO₂, unterhalb des Filtermaterials 12 eine Gasschicht 20 aus. Diese Gasschicht 20 stellt einen thermischen Isolator dar und verhindert eine effektive Wärmeübertragung von dem Fluid innerhalb der Filterbox 8 an das Fluid außerhalb der Filterbox 8.

Um die wirksame Filterfläche des Filtermaterials 12 zu vergrößern, weist das Filtermaterial 12 häufig eine gefaltete Oberfläche auf.

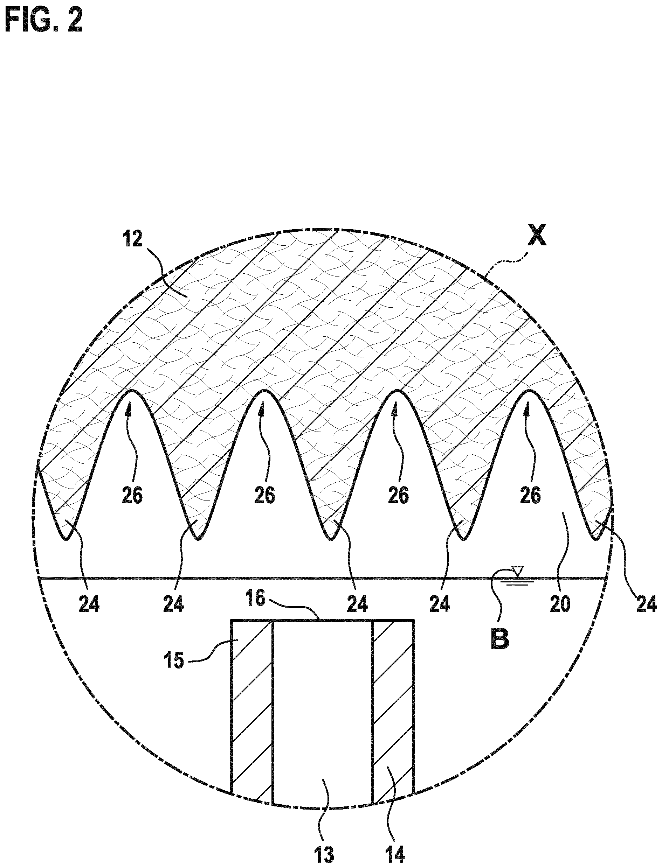

Figur 2 zeigt einen vergrößerten Ausschnitt eines Bereichs X um die erste Absaugöffnung 16 am oberen Ende 15 des Absaugrohres 14.

Die gefaltete Oberfläche des Filtermaterials 12 bildet "Bergspitzen" 24 und "Täler" 26 aus. Die Begriffe "Berg" und "Tal" sind dabei aus Sicht des Filtermaterials 12 gewählt, so dass die "Bergspitzen" 24 in der in der Figur 2 gezeigten Darstellung von dem Filtermaterial 12 ausgehend nach unten ragen, und sich die "Täler" 26 nach oben in das Filtermaterial 12 erstrecken.

Im Betrieb füllen sich die "Täler" 26 des Filtermaterials 12, wie zuvor beschrieben, mit aus dem Fluid austretendem Gas.

Bei niedrigen Umgebungstemperaturen müssen das Filtermaterial 12 und das gefrorene Fluid oberhalb und unterhalb des Filtermaterials 12 beheizt werden, um gefrorenes Fluid aufzutauen und/oder ein Einfrieren des Fluids zu verhindern.

Dies gestaltet sich schwierig, wenn die "Täler" 26 mit Gas gefüllt sind, da das sich in den "Tälern" 26 ansammelnde Gas einen zusätzlichen Wärmeisolator darstellt, der eine gute Wärmeübertragung zwischen dem Fluid auf beiden Seiten des Filtermaterials 12 behindert.

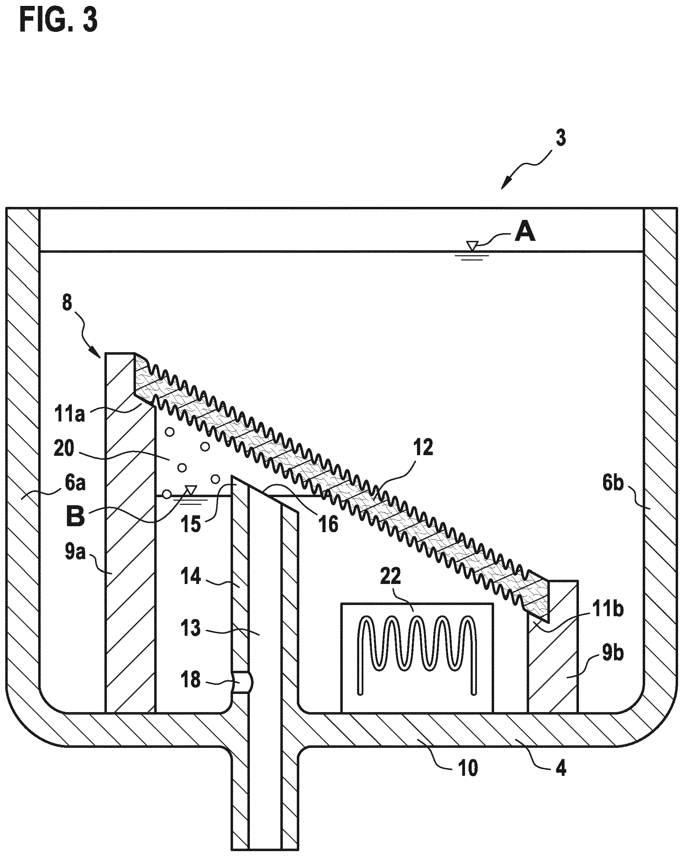

Fig. 3 zeigt ein zweites Ausführungsbeispiel eines erfindungsgemäßen Fluidtanks 3, das ausgebildet ist, um das zu vor beschriebene Problem der thermischen Isolation durch das im Betrieb aus dem Fluid austretende Gas zu vermeiden.

Bei dem in der Fig. 3 gezeigten zweiten Ausführungsbeispiel eines Fluidtanks 3 ist die auf der linken Seite dargestellte erste Filterbox-Seitenwand 9a höher als die rechts dargestellte zweite Filterbox-Seitenwand 9b.

Das Filtermaterial 12, das wie im ersten Ausführungsbeispiel auf an den oberen Ende der Filterbox-Seitenwände 9a, 9b ausgebildeten Vorsprüngen 11 a, 11 b aufliegt, ist durch die unterschiedliche Höhe der Seitenwände 9a, 9b schräg und nicht, wie im ersten Ausführungsbeispiel, parallel zum Boden 10 der Filterbox 8 angeordnet, so dass die Filterbox 8 einen links dargestellten höheren Bereich und einen rechts dargestellten niedrigeren Bereich aufweist.

Das im Betrieb aus dem Fluid austretende Gas wandert aufgrund seiner geringeren Dichte entlang der dem Inneren der Filterbox 8 zugewandten Unterseite des Filtermaterials 12 nach links in den höheren Bereich der Filterbox 8 und sammelt sich unterhalb des Filtermaterials 12 im höheren Bereich der Filterbox 8. Im rechts dargestellten niedrigeren Bereich der Filterbox 8 bildet sich keine isolierende Gasschicht 20 zwischen dem Fluid in der Filterbox 8 und dem Filtermaterial 12 aus und das Filtermaterial 12 befindet sich auch nach längerem Betrieb (Absaugen von Fluid) in direktem Kontakt mit dem Fluid innerhalb der Filterbox 8.

Die Durchlässigkeit des Filtermaterials 12 im rechten, niedrigen Bereich der Filterbox 8 wird verbessert, da keine Gasschicht unterhalb des Filtermaterials 12 das Durchtreten von Fluid durch das Filtermaterial 12 behindert.

Da keine thermisch isolierende Gasschicht 20 zwischen dem Fluid und dem Filtermaterial 12 vorhanden ist, kann von der Wärmequelle 22 abgegebene Wärme von dem Fluid innerhalb der Filterbox 8 gut durch das Filtermaterial 12 an Fluid außerhalb der Filterbox 8 übertragen werden, so dass eine einzige Wärmequelle 22 ausreichend ist, um das gesamte Fluid, das sich im Fluidtank 3 befindet, d.h. sowohl das Fluid innerhalb als auch das Fluid außerhalb der Filterbox 8, zu erwärmen und ggf. aufzutauen.

In dem in der Fig. 3 gezeigten zweiten Ausführungsbeispiel ist die obere Stirnseite des Absaugrohres 14 abgeschrägt, so dass sie im Wesentlichen parallel zur Unterseite des schräg oberhalb des Absaugrohres 14 angeordneten Filtermaterials 12 verläuft. Die abgeschrägte obere Stirnseite des Absaugrohres 14 ermöglicht es, das obere Ende 15 des Absaugrohres 14 in einem sehr geringen Abstand von der Unterseite des Filtermaterials 12 anzuordnen, so dass nur ein schmaler Bereich bzw. Spalt zwischen dem oberen Ende 15 des Absaugrohres 14 und dem Filtermaterial 12 verbleibt. Dies ermöglicht einen besonders hohen Fluidstand im Inneren der Filterbox 8.

Im Gegensatz zu dem in der Fig. 1 gezeigten ersten Ausführungsbeispiel eines Fluidtanks 2 verlaufen in dem in der Fig. 3 gezeigten zweiten Ausführungsbeispiel 3 die Seitenwände 9a, 9b der Filterbox 8 bis zum Boden 4 des Fluidtanks, so dass der Filterbox-Boden 10 in den Boden 4 des Fluidtanks 3 integriert ist. Dies vereinfacht die Herstellung eines Fluidtanks 3 mit integrierter Filterbox 8, da der Fluidtank 3 mit integrierter Filterbox 8 beispielsweise als einstückiges Spritzgussteil herstellbar ist.

Das in der Fig. 1 gezeigte erste Ausführungsbeispiel 2 mit einer separaten Filterbox 8 mit einem eigenen, vom Boden 4 des Tank 2 getrennten Filterbox-Boden 10 hat demgegenüber den Vorteil, dass die Filterbox 8 so ausgebildet sein kann, dass sie unabhängig vom Fluidtank 2 austauschbar ist und/oder wahlweise unterschiedlich ausgebildete Filterboxen 8 in den Fluidtank 2 einsetzbar sind.

Die Integration der Filterbox 8 in den Boden 4 des Fluidtanks 2, 3 ist unabhängig von der räumlichen Ausrichtung des Filtermaterials 12. So kann eine separate Filterbox 8 gemäß dem ersten Ausführungsbeispiel 2 ebenso mit einem schräg angeordneten Filtermaterial 12 gemäß dem zweiten Ausführungsbeispiel 3 kombiniert werden, wie eine integrierte Filterbox 8 (zweites Ausführungsbeispiel) mit einem parallel zum Boden 4 des Tank 2 angeordneten Filtermaterial 12 (erstes Ausführungsbeispiel).

## Patentansprüche

1. Fluidtank (2, 3) zur Speicherung von flüssigem Reduktionsmittel zur Abgasreduktion mit
einer innerhalb des Fluidtanks (2, 3) angeordneten Filterbox (8), die auf einer oberen, von einem Boden des Fluidtanks (2, 3) abgewandten Seite zumindest teilweise von einem Filtermaterial (12) begrenzt wird, und
einem durch einen Boden (10) der Filterbox (8) in das Innere der Filterbox (8) geführten Absaugrohr (14),
**dadurch gekennzeichnet, dass**
das Absaugrohr (14) an einem oberen, vom Boden des Fluidtanks (2) abgewandten Ende (15), das knapp unterhalb des Filtermaterials (12) angeordnet ist, eine erste Absaugöffnung (16) und in seinem Umfang in einem bodennahen Bereich unterhalb des oberen Endes (15) wenigstens eine zweite Absaugöffnung (18) aufweist, wobei die zweite Absaugöffnung (18) einen kleineren Querschnitt als die erste Absaugöffnung (16) aufweist.

2. Fluidtank (2, 3) nach Anspruch 1, wobei die erste Absaugöffnung (16) in der vom Boden (4) des Fluidtanks (2) abgewandten Stirnseite des Absaugrohrs (14) ausgebildet ist.

3. Fluidtank (2, 3) nach Anspruch 1 oder 2, wobei die erste Absaugöffnung (16) einen Querschnitt von ca. 20 mm² und die zweite (18) Absaugöffnung einen Querschnitt von höchstens 3 mm² hat.

4. Fluidtank (2, 3) nach einem der vorangehenden Ansprüche, wobei die zweite Absaugöffnung (18) einen größeren Abstand vom oberen Ende (15) des Absaugrohres (14) als von einem Boden (10) der Filterbox (8) hat.

5. Fluidtank (3) nach einem der vorangehenden Ansprüche, wobei das Filtermaterial (12) schräg zu einem Boden (4) des Fluidtanks (3) angeordnet ist, so dass das Filtermaterial (12) in einem ersten Bereich der Filterbox (8) einen größeren Abstand vom Boden (4) des Fluidtanks (3) als in einem zweiten Bereich der Filterbox (8) aufweist.

6. Fluidtank (3) nach Anspruch 5, wobei das Absaugrohr (14) im höheren Bereich der Filterbox (8) angeordnet ist.

7. Fluidtank (3) nach Anspruch 5 oder 6, wobei das obere Ende (15) des Absaugrohres (14) abgeschrägt ist, wobei das obere Ende (15) des Absaugrohes (14) vorzugsweise so abgeschrägt ist, dass eine obere Stirnseite des Absaugrohres (14) im Wesentlichen parallel zum Filtermaterial (12) verläuft.

8. Fluidtank (3) nach einem der Ansprüche 5 bis 7, wobei im zweiten Bereich der Filterbox (8) eine Heizquelle (22) angeordnet ist.

9. Verfahren zum Absaugen von Fluid aus einem Fluidtank (2, 3) nach einem der Ansprüche 1 bis 8, wobei
das Fluid durch die erste Absaugöffnung (16) und durch die wenigstens eine zweite Absaugöffnung (18) des Absaugrohres (14) abgesaugt wird.

## Claims

1. Fluid tank (2, 3) for storing liquid reducing agent for exhaust-gas reduction, having
a filter box (8) which is arranged within the fluid tank (2, 3) and which, on an upper side averted from a base of the fluid tank (2, 3), is at least partially delimited by a filter material (12), and
a suction-extraction pipe (14) which is led through a base (10) of the filter box (8) into the interior of the filter box (8),
**characterized in that**
the suction-extraction pipe (14), at an upper end (15) which is averted from the base of the fluid tank (2) and which is arranged a short distance below the filter material (12), has a first suction-extraction opening (16), and in its circumference in a region close to the base, below the upper end (15), has at least one second suction-extraction opening (18), wherein the second suction-extraction opening (18) has a smaller cross section than the first suction-extraction opening (16).

2. Fluid tank (2, 3) according to Claim 1, wherein the first suction-extraction opening (16) is formed in that face side of the suction-extraction pipe (14) which is averted from the base (4) of the fluid tank (2).

3. Fluid tank (2, 3) according to Claim 1 or 2, wherein the first suction-extraction opening (16) has a cross section of approximately 20 mm² and the second (18) suction-extraction opening has a cross section of at most 3 mm².

4. Fluid tank (2, 3) according to one of the preceding claims, wherein the second suction-extraction opening (18) has a greater spacing from the upper end (15) of the suction-extraction pipe (14) than from a base (10) of the filter box (8).

5. Fluid tank (3) according to one of the preceding claims, wherein the filter material (12) is arranged obliquely with respect to a base (4) of the fluid tank (3), such that the filter material (12) has a greater spacing from the base (4) of the fluid tank (3) in a first region of the filter box (8) than in a second region of the filter box (8).

6. Fluid tank (3) according to Claim 5, wherein the suction-extraction pipe (14) is arranged in the relatively high region of the filter box (8).

7. Fluid tank (3) according to Claim 5 or 6, wherein the upper end (15) of the suction-extraction pipe (14) is bevelled, wherein the upper end (15) of the suction-extraction pipe (14) is preferably bevelled such that an upper face side of the suction-extraction pipe (14) runs substantially parallel to the filter material (12).

8. Fluid tank (3) according to one of Claims 5 to 7, wherein a heat source (22) is arranged in the second region of the filter box (8).

9. Method for the extraction by suction of fluid from a fluid tank (2, 3) according to one of Claims 1 to 8,
wherein the fluid is extracted by suction through the first suction-extraction opening (16) and through the at least one second suction-extraction opening (18) of the suction-extraction pipe (14).

## Revendications

1. Réservoir de fluide (2, 3) pour le stockage d'agent de réduction liquide pour la réduction de gaz d'échappement, avec
un boîtier de filtre (8) disposé à l'intérieur du réservoir de fluide (2, 3), qui est limité au moins en partie par un matériau de filtre (12) sur un côté supérieur détourné d'un fond du réservoir de fluide (2, 3), et
un tube d'aspiration (14) mené à l'intérieur du boîtier de filtre (8) à travers un fond (10) du boîtier de filtre (8)
**caractérisé en ce que**
le tube d'aspiration (14) présente à une extrémité supérieure (15), détournée du fond du réservoir de fluide (2), qui est disposée juste en dessous du matériau de filtre (12), une première ouverture d'aspiration (16) et dans son pourtour, dans une région proche du fond en dessous de l'extrémité inférieure (15), au moins une deuxième ouverture d'aspiration (18), dans lequel la deuxième ouverture d'aspiration (18) présente une section transversale plus petite que la première ouverture d'aspiration (16).

2. Réservoir de fluide (2, 3) selon la revendication 1, dans lequel la première ouverture d'aspiration (16) est formée dans le côté frontal du tube d'aspiration (14) détourné du fond (4) du réservoir de fluide (2).

3. Réservoir de fluide (2, 3) selon la revendication 1 ou 2, dans lequel la première ouverture d'aspiration (16) a une section transversale d'environ 20 mm² et la deuxième ouverture d'aspiration (18) a une section transversale d'au plus 3 mm².

4. Réservoir de fluide (2, 3) selon l'une quelconque des revendications précédentes, dans lequel la deuxième ouverture d'aspiration (18) présente une plus grande distance par rapport à l'extrémité supérieure (15) du tube d'aspiration (14) que par rapport à un fond (10) du boîtier de filtre (8).

5. Réservoir de fluide (3) selon l'une quelconque des revendications précédentes, dans lequel le matériau de filtre (12) est disposé en oblique par rapport à un fond (4) du réservoir de fluide (3), de telle manière que le matériau de filtre (12) présente une plus grande distance par rapport au fond (4) du réservoir de fluide (3) dans une première région du boîtier de filtre (8) que dans une deuxième région du boîtier de filtre (8).

6. Réservoir de fluide (3) selon la revendication 5, dans lequel le tube d'aspiration (14) est disposé dans la région plus élevée du boîtier de filtre (8).

7. Réservoir de fluide (3) selon la revendication 5 ou 6, dans lequel l'extrémité supérieure (15) du tube d'aspiration (14) est biseautée, dans lequel l'extrémité supérieure (15) du tube d'aspiration (14) est de préférence biseautée de telle manière qu'un côté frontal supérieur du tube d'aspiration (14) soit essentiellement parallèle au matériau de filtre (12).

8. Réservoir de fluide (3) selon l'une quelconque des revendications 5 à 7, dans lequel une source de chauffage (22) est disposée dans la deuxième région du boîtier de filtre (8).

9. Procédé d'aspiration de fluide hors d'un réservoir de fluide (2, 3) selon l'une quelconque des revendications 1 à 8, dans lequel on aspire le fluide à travers la première ouverture d'aspiration (16) et à travers la deuxième ouverture d'aspiration (18) du tube d'aspiration (14).
